# EUROPEAN PATENT APPLICATION

(11) **EP 4 530 441 A2**
(43) Date of publication of application: **02.04.2025**
(21) Application number: 24202697.9
(22) Date of filing: 25.09.2024
(51) Int. Cl.: F01D 25/00, F01D 25/24, F01D 25/26

(54) **THREAD GUARD**

(30) Priority: 26.09.2023 US 202318372838
(71) Applicant: PRATT & WHITNEY CANADA CORP., Longueuil, Québec J4G 1A1 (CA)
(72) Inventor: NAGARAJ, Raghunath, Ontario, L9E 1N7 (CA); ALBUS, Jesse, Ontario, M8W 0B2 (CA)
(74) Representative: Dehns

(57) **Abstract**

A bolt assembly (42) for connecting component sections of an aircraft component is disclosed and includes a guard (64) that is assembled onto threads (62) of a bolt (56). The guard (64) includes a first end (63), a second end (65) and an outer surface (68) having a uniform diameter (88) between the first end (63) and the second end (65). The bolt assembly (42) further includes a nut (74) including internal threads (66) securable to the external threads (62) of the bolt (56).

## Description

### TECHNICAL FIELD

The present disclosure relates generally to a bolt assembly for a joint between component structures of an aircraft engine.

### BACKGROUND

A gas turbine engine typically includes a fan section, a compressor section, a combustor section, and a turbine section. Many engine structures are secured by a bolt assembly that extends through a flanged connection. The flanged connection includes openings through separate parts through which the bolt assembly extends. Shear forces acting transverse to a length of the bolt assembly may result in contact between exposed bolt threads and an inner surface of the openings. Contact and engagement between the inner surface of the opening and the bolt threads may reduce strength and longevity of the connection.

### SUMMARY

A connection interface between components of a turbine engine according to an example disclosed embodiment includes, among other possible things, a first component defining a first flange with a first opening, a second component defining a second flange with a second opening, a bolt including a shaft with external threads extending from a bolt head to a distal end. The shaft extends through both the first opening and the second opening. A guard is provided that includes internal threads, a first end, a second end and an outer surface shaped to fit within both of the first opening and the second opening. The connection further includes a nut including internal threads secured to the external threads of the bolt.

A bolt assembly for connecting component sections of an aircraft component according to another disclosed example embodiment includes, among other things, a bolt including a shaft having external threads extending from a bolt head to a distal end and a guard including internal threads mated to the external threads of the bolt. The guard further includes a first end, a second end and an outer surface having a uniform diameter between the first end and the second end. The bolt assembly further includes a nut including internal threads securable to the external threads of the bolt.

A method of securing component parts of an aircraft engine according to disclosed example embodiment includes, among other possible things, aligning a first opening of a first component with a second opening of second component, mating internal threads of a guard to external threads of a bolt, inserting the mated bolt and guard through the first opening and the second opening, mating a nut to external threads of the bolt that extend outside of the first opening and the second opening, and tightening the nut against a surface of one of the first component and the second component to a predetermined torque.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine.
Figure 2 is a schematic view of a prior art bolted j oint.
Figure 3 is a schematic view of an example bolted connection interface.
Figure 4 is a top view of an example guard embodiment.
Figure 5 is a schematic view of an example bolt.
Figure 6 is a cross-sectional view of an example guard embodiment.
Figure 7 is a cross-sectional view of the example guard assembled to the bolt.

### DETAILED DESCRIPTION

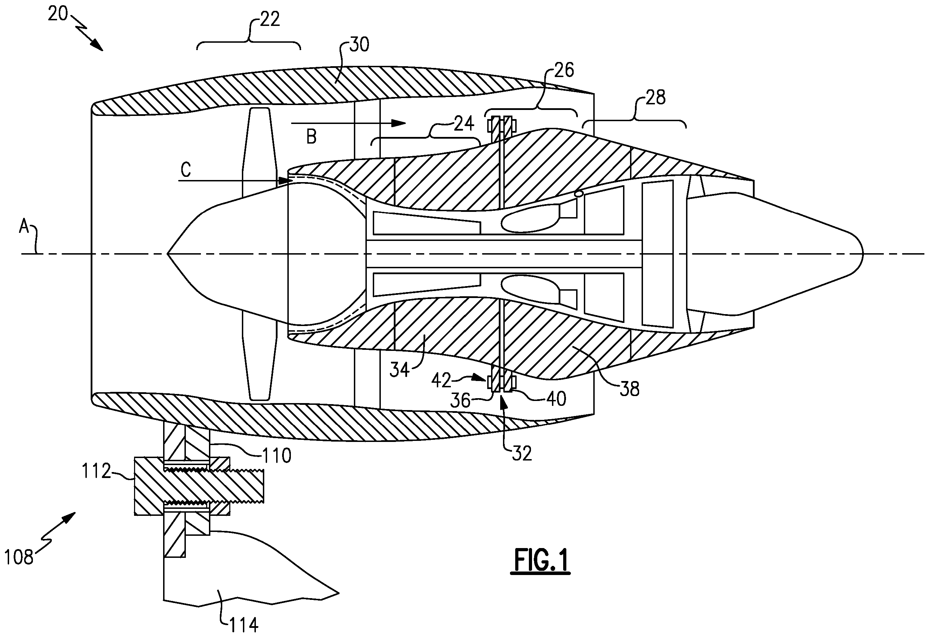

Figure 1 schematically illustrates an aircraft turbine engine 20. The example engine 20 includes a bolt assembly 42 utilized to secure engine structures together at a flanged connection. The example bolt assembly 42 includes features for accommodating shear loads on the flanged connection.

The example turbine engine 20 is a turbofan that generally incorporates a fan section 22, a compressor section 24, a combustor section 26 and a turbine section 28. The fan section 22 drives air along a bypass flow path B in a bypass duct defined within a nacelle 30. The fan section 22 also drives air along a core flow path C into the compressor section 24 for compression and communication into the combustor section 26. In the combustor section 26, the compressed air is mixed with fuel and burnt to generate an exhaust gas flow that expands through the turbine section 28. Although depicted as a turbofan turbine engine in the disclosed non-limiting embodiment, it should be understood that the concepts described herein are not limited to use with turbofans as the teachings may be applied to other types of aircraft engines and structures.

The turbine engine 20 includes case components that circumscribe rotating components described above. In the example schematic illustration, a first case component 34 is secured to a second case component 38 at a bolted connection interface 32. The first case component 34 includes a first flange 36 and the second case component 38 includes a second flange 40. The case components 34, 38 are secured to each other by a bolt assembly 42 that extends through each of the first and second flanges 36, 40.

Additionally, a bolt assembly according to this disclosure may be utilizes for securement of other engine structures and aircraft components. For example, a bolt assembly 112 is shown as art of a connection interface 108 between an engine mount 110 and an aircraft structure 114 as is schematically shown. Moreover, the disclosed bolt assemblies 42, 112 may be utilized for any bolted joint utilized as part of an engine and/or aircraft structure.

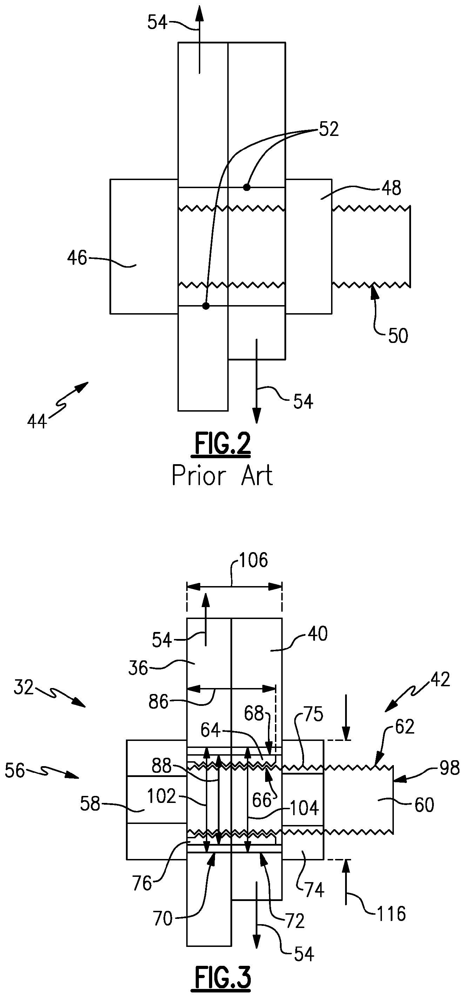

Referring to Figure 2, a prior art bolt assembly 44 is schematically shown and includes bolt 46 with threads 50 that extend through openings in abutted flanges. A nut 48 is assembled to the threads 50 to secure the flanges together. The connection shown is an example of a connection that encounters shear loads indicated by arrows 54 in a direction perpendicular to a longitudinal length of the bolt 46. Exposure of the threads 50 to excessive shear forces within the joint can cause harmful interaction with inner surfaces 52 of the openings. The threads 50 are formed with peaks that can concentrate shear loads in the bolt 56 that may reduce joint durability and longevity.

Referring to Figure 3 with continued reference to Figure 1 an example bolt assembly 42 according to this disclosure includes a bolt 56 with a shaft 60 having external threads 62 that extend from a bolt head 58 to a distal end 98. A thread guard 64 is assembled onto the external threads 62 of the bolt 56. The thread guard 64 includes internal threads 66 that mate to the external threads 62 of the bolt 56. A nut 74 is secured to the bolt 56 and is tightened to a predetermined torque to hold the first flange 36 to the second flange 40.

The example bolted connection interface 32 is exposed to shear loads schematically indicated by arrows 54 that are perpendicular to a longitudinal length of the bolt shaft 60. The first flange 36 includes a first opening 70 and the second flange 40 includes a second opening 72. The bolt 56 and thread guard 64 extend through the aligned first opening 70 and the second opening 72.

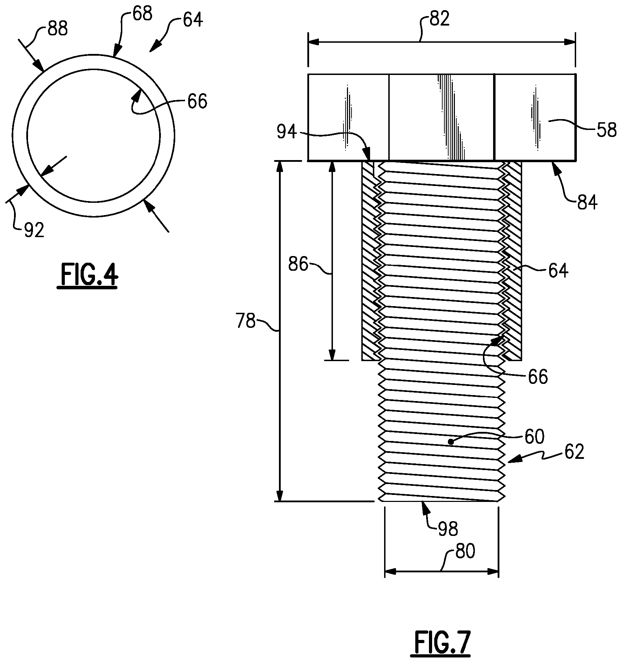

Referring to Figure 4, with continued reference to Figure 3, the thread guard 64 includes an outer surface 68 with a uniform outer diameter 88 that contacts inner surfaces of the first and second openings 70, 72. The shear load 54 is distributed across the outer surface 68 of the guard 64. Moreover, the guard 64 prevents contact between inner surfaces of the first and second openings 70, 72 and the threads 62 of the bolt 56. The uniform diameter 88 is not interrupted circumferentially and provides a constant and uniform surface that is not interrupted by torque application surfaces such as are commonly provided for a nut.

The bolted connection interface 32 is formed by installing the guard 64 onto the bolt 56. The internal threads 66 of the guard 64 correspond to the external threads 62 of the bolt 56. The guard 64 includes a head portion 76 that abuts the bolt head 58. The guard 64 is threaded onto the bolt 56 until the head portion 76 abuts the bolt head 58. A length 86 of the guard 64 is shorter than a combined thickness 106 of the first flange 36 and the second flange 40. The shorter length of the guard 64 prevents interference with tightening of the nut 74 to hold the flanges 36, 40 together.

The nut 74 is threaded onto the exposed portion of the bolt threads 62 and tightened against the flange 40. The first and second openings 70 and 72 are sized to accommodate the guard 64 instead of the outer diameter of just the bolt shaft 60. The first opening 70 includes a first diameter 102 and the second opening 72 includes a second diameter 104. In one disclosed example, the first and second diameters 102, 104 are the same. In the disclosed example embodiment, the first and second openings 70, 72 are round and the outer surface 68 of the guard is also a corresponding round shape. However, the openings through the flanges and the guard may be of other shapes and remain within the contemplation and scope of this disclosure.

A fit between the outer diameter 88 of the guard 64 and the first and second diameters 102, 104 is dependent on the application. The difference between the outer diameter 88 and the first and second diameters 102, 104 may define a loose to tight clearance fit that eases assembly while also minimizing potential relative movement. In one example embodiment, the outer diameter 88 is between about 85% and 95% of at least one of the diameters 102, 104 of each of the first opening 70 and the second opening 72.

Although an example relative size is disclosed by way of an example fit, other relative sizes between the opening diameters 102, 104 and the outer diameter 88 of the guard 64 may be utilized and are within the contemplation and scope of this disclosure.

The uniform outer surface 68 of the guard 64 provides a uniform and large contact area with the inner surfaces of the first and second openings 70, 72. The large contact surface distributes loads across a large area that increases joint strength and longevity.

The example nut 74 is hexagon shaped and includes a width 116 that provides for abutment against the outer surface of the flange 40. Moreover, the hexagon shaped of the nut 74 provides surfaces for the application of torque for tightening. The nut 74 includes internal threads 75 that engage and mate to the threads 62 of the bolt 56. The nut 74 abuts against one surface of the flange 40 and is tightened to a predetermined torque prescribed for the specific bolted connection interface. Although the nut 74 is disclosed by way of example as having a hexagonal shape, other shapes that provide for the application of torque may also be utilized and are within the contemplation of this disclosure.

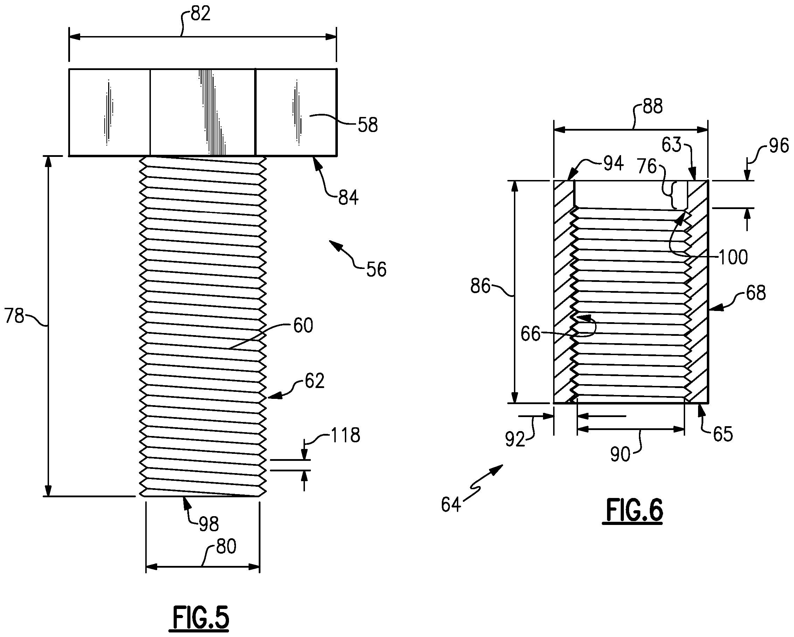

Referring to Figures 5, 6 and 7 with continued reference to Figures 3 and 4, the example thread guard 64 is shown with an example bolt 56 to illustrate relative sizes between features. The bolt 56 includes the bolt head 58 with a width 82. The bolt head 58 may be a hexagon shaped or have other shapes to provide surfaces that accommodate the application of torque.

In one example embodiment, the thread guard 64 includes a length 86 between a first end 63 and a second end 65 that is between 65% and 85% of a length 78 of the shaft 60 between a bottom surface 84 of the bolt head 58 and the distal end 98. In another example embodiment, the length 86 is between 70% and 80% the length 78 of the shaft 60.

In one example embodiment, the outer diameter 88 of the guard 64 is between 60% and 85% of a maximum width 82 of the bolt head 58. In another example embodiment, the outer diameter 88 is between 70% and 80% of the maximum width 82 of the bolt head 58.

In one example embodiment, the guard 64 includes a thickness 92 between a pitch diameter 90 of the internal threads 66 and the outer surface 68 that is between 10% and 25% of a pitch diameter 80 of the external threads 62 of the bolt 56. In another example embodiment, the thickness 92 is between 15% and 20% of the pitch diameter 80.

The example guard 64 includes the head portion 76 that abuts the bottom surface 84 of the bolt head 58. The head portion 76 prevents further movement of the guard relative to the bolt 56. The head portion 76 includes an abutment surface 94 that is configured to abut the bottom surface 84 of the bolt head 58. The head portion 76 further includes an inner spacing 96 between a first one 100 of the internal threads 66 and the abutment surface 94. In a disclosed example embodiment, the spacing 96 is equal to or greater than a pitch 118 of the external threads 62 of the bolt 56.

The head portion 76 provides a relief that enables direct abutment against the bolt head 58 without interference that may be caused at the interface between the bottom surface 84 of the bolt head 58 and the shaft 60.

In one disclosed example, the guard 64 and bolt 56 are formed from the same material. The material may include steel, aluminum and/or alloys selected based on application specific requirements. Moreover, the diameter and length of the bolt 56 and guard 64 will vary based on the application and securement requirements.

Accordingly, the example bolt assembly 42 includes the guard 64 that enables the use of a threaded bolt within connections under shear loading to provide increased strength and durability.

A connection interface 32, 108 between components of a turbine engine 20 according to an example disclosed embodiment includes, among other possible things, a first component 34 defining a first flange 36 with a first opening 70, a second component 38 defining a second flange 40 with a second opening 72, a bolt 56 including a shaft 60 with external threads extending from a bolt head to a distal end, wherein the shaft 60 extends through both the first opening 70 and the second opening 72, a guard 64 including internal threads 66, a first end 63, a second end 65 and an outer surface 68 shaped to fit within both of the first opening 70 and the second opening 72, and a nut 74 including internal threads 75 secured to the external threads of the bolt 56.

In a further example embodiment of the foregoing connection interface 32, 108, the guard 64 includes a length 86 that is less than a combined thickness 106 of the first flange 36 and the second flange 40.

In a further example embodiment of any of the foregoing connection interfaces 32, 108, the outer surface 68 of the guard 64 is of a uniform diameter 88 along the entire length 86 between the first end 63 and the second end 65.

In a further example embodiment of any of the foregoing connection interfaces 32, 108, the uniform outer diameter 88 of the guard 64 is between about 85% and 95% of a diameter 102, 104 of at least one of the first opening 70 and the second opening 72.

In a further example embodiment of any of the foregoing connection interface 32, 108, the uniform outer diameter 88 of the guard 64 is between 60% and 85% of a maximum width 82 of the bolt head 58.

In a further example embodiment of any of the foregoing connection interface 32, 108, a thickness 92 of the guard 64 between a pitch diameter 90 of the internal threads 66 and the outer surface 68 is between 10% and 25% of a pitch diameter 80 of the external threads 62 of the bolt 56.

In a further example embodiment of any of the foregoing connection interface 32, 108, the guard 64 includes a head portion 76 including an abutment surface 94 configured to abut a bottom surface 84 of the bolt head 58 and an inner surface that defines a spacing 96 between a first one 100 of the internal threads 66 and the abutment surface 94.

In a further example embodiment of any of the foregoing connection interface 32, 108, the spacing 96 is equal to or greater than a pitch 118 of the external threads 62 of the bolt 56.

In a further example embodiment of any of the foregoing connection interface 32, 108, the guard 64 and the bolt 56 are formed from a common material.

A bolt assembly 42, 108 for connecting component sections of an aircraft component according to another disclosed example embodiment includes, among other things, a bolt 56 including a shaft 60 having external threads 62 extending from a bolt head 58 to a distal end 98 and a guard 64 including internal threads 66 mated to the external threads 62 of the bolt 56, a first end 63, a second end 65 and an outer surface 68 having a uniform diameter 88 between the first end 63 and the second end 65. The bolt assembly 42 further includes a nut 74 including internal threads 75 securable to the external threads 62 of the bolt 56.

In a further example embodiment of the foregoing bolt assembly 42, 108, a length 86 of the guard 64 between the first end 63 and the second end 65 is between 65% and 85% of the length 78 between the bolt head 58 and the distal end 98 of the bolt 56.

In a further example embodiment of any of the foregoing bolt assemblies 42, 108, a thickness 92 of the guard 64 between a pitch diameter 90 of the internal threads 66 and the outer surface 68 is between 10% and 25% of a pitch diameter 80 of the external threads 62 of the bolt 56.

In a further example embodiment of any of the foregoing bolt assembly 42, 108, an outer diameter 88 of the guard 64 is between 70% and 85% of a width 82 of the bolt head.

In a further example embodiment of any of the foregoing bolt assembly 42, 108, the guard 64 includes a head portion 76 including an abutment surface 94 configured to abut a bottom surface 84 of the bolt head 58 and an inner surface defining a spacing 96 between a first one 100 of the internal threads 66 and the abutment surface 94.

In a further example embodiment of any of the foregoing bolt assembly 42, 108, the spacing 96 is equal to or greater than a pitch 118 of the external threads 62 of the bolt 56.

In a further example embodiment of any of the foregoing bolt assembly 42, 108, the guard and the bolt 56 are formed from a common material.

A method of securing component parts of an aircraft engine 20 according to disclosed example embodiment includes, among other possible things, aligning a first opening 70 of a first component 34 with a second opening 72 of second component 38, mating internal threads 66 of a guard 64 to external threads 62 of a bolt 56, inserting the mated bolt 56 and guard 64 through the first opening 70 and the second opening 72, mating a nut 74 to external threads 62 of the bolt 56 that extend outside of the first opening 70 and the second opening 72, and tightening the nut 74 against a surface of one of the first component 34 and the second component 38 to a predetermined torque.

In a further embodiment of the foregoing method, the guard 64 includes an outer surface 68 corresponding with a shape of an inner surface of each of the first opening 70 and the second opening 72.

In a further embodiment of any of the foregoing methods, the outer surface 68 of the guard 64 is of a uniform diameter 88 that is between 85% and 95% of a diameter 102, 104 of each of the first opening 70 and the second opening 72.

In a further embodiment of any of the foregoing methods, the guard 64 includes a head portion 76 with an abutment surface 94 configured to abut a bottom surface 84 of a head 58 of the bolt 56 and an inner surface defining a spacing 96 between a first one 100 of the internal threads 66 and the abutment surface 94 and mating the guard to the bolt 56 includes threading the guard 64 onto the bolt 56 until the abutment surface 94 contacts the bottom surface 84 of the head 58 of the bolt 56.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A connection interface (32; 108) between components of a turbine engine (20) comprising:
a first component (34) defining a first flange (36) with a first opening (70);
a second component (38) defining a second flange (40) with a second opening (72);
a bolt (56) including a shaft (60) with external threads (62) extending from a bolt head (58) to a distal end (98), wherein the shaft (60) extends through both the first opening (70) and the second opening (72);
a guard (64) including internal threads (66), a first end (63), a second end (65) and an outer surface (68) shaped to fit within both of the first opening (70) and the second opening (72); and
a nut (74) including internal threads (75) secured to the external threads (62) of the bolt (56).

2. The connection interface (32; 108) as recited in claim 1, wherein the guard (64) includes a length (86) that is less than a combined thickness (106) of the first flange (36) and the second flange (40).

3. The connection interface (32; 108) as recited in claim 1 or 2, wherein the outer surface (68) of the guard (64) is of a uniform diameter (88) along the entire length (86) between the first end (63) and the second end (65).

4. The connection interface (32; 108) as recited in claim 3, wherein the uniform outer diameter (88) of the guard (64) is between about 85% and 95% of a diameter (102, 104) of at least one of the first opening (70) and the second opening (72).

5. The connection interface (32; 108) as recited in claim 3 or 4, wherein the uniform outer diameter (88) of the guard (64) is between 60% and 85% of a maximum width (82) of the bolt head (58).

6. A bolt assembly (42; 112) for connecting component sections of an aircraft component, the bolt assembly (42; 112) comprising:
a bolt (56) including a shaft (60) having external threads (62) extending from a bolt head (58) to a distal end (98);
a guard (64) including internal threads (66) mated to the external threads (62) of the bolt (56), a first end (63), a second end (65) and an outer surface (68) having a uniform diameter (88) between the first end (63) and the second end (65); and
a nut (74) including internal threads (75) securable to the external threads (62) of the bolt (56).

7. The connection interface (32; 108) or bolt assembly (42; 112) as recited in any preceding claim, wherein a length (86) of the guard (64) between the first end (63) and the second end (65) is between 65% and 85% of the length (78) between the bolt head (58) and the distal end (98) of the bolt (56).

8. The connection interface (32; 108) or bolt assembly (42; 112) as recited in any preceding claim, wherein a thickness (92) of the guard (64) between a pitch diameter (90) of the internal threads (66) and the outer surface (68) is between 10% and 25% of a pitch diameter (80) of the external threads (62) of the bolt (56).

9. The connection interface (32; 108) or bolt assembly (42; 112) as recited in any preceding claim, wherein an outer diameter (88) of the guard (64) is between 70% and 85% of a width (82) of the bolt head (58).

10. The connection interface (32; 108) or bolt assembly (42; 112) as recited in any preceding claim, wherein the guard (64) includes a head portion (76) including an abutment surface (94) configured to abut a bottom surface (84) of the bolt head (58) and an inner surface defining a spacing (96) between a first one of the internal threads (66) and the abutment surface (94).

11. The connection interface (32; 108) or bolt assembly (42; 112) as recited in claim 10, wherein the spacing (96) is equal to or greater than a pitch (118) of the external threads (62) of the bolt (56).

12. The connection interface (32; 108) or bolt assembly (42; 112) as recited in any preceding claim, wherein the guard (64) and the bolt (56) are formed from a common material.

13. A method of securing components parts of an aircraft engine (20), the method comprising:
aligning a first opening (70) of a first component (34) with a second opening (72) of second component (38);
mating internal threads (66) of a guard (64) to external threads (62) of a bolt (56);
inserting the mated bolt (56) and guard (64) through the first opening (70) and the second opening (72);
mating a nut (74) to external threads (62) of the bolt (56) that extend outside of the first opening (70) and the second opening (72); and
tightening the nut (74) against a surface of one of the first component (34) and the second component (38) to a predetermined torque.

14. The method as recited in claim 13, wherein the guard (64) includes an outer surface (68) corresponding with a shape of an inner surface of each of the first opening (70) and the second opening (72).

15. The method as recited in claim 13 or 14, wherein:
the outer surface (68) of the guard (64) is of a uniform diameter (88) that is between 85% and 95% of a diameter (102, 104) of each of the first opening (70) and the second opening (72); and/or
the guard (64) includes a head portion (76) with an abutment surface (94) configured to abut a bottom surface (84) of a head (58) of the bolt (56) and an inner surface defining a spacing (96) between a first one of the internal threads (66) and the abutment surface (94) and mating the guard (64) to the bolt (56) includes threading the guard (64) onto the bolt (56) until the abutment surface (94) contacts the bottom surface (84) of the head (58) of the bolt (56).
